# EUROPÄISCHE PATENTSCHRIFT

(11) **EP 3 345 712 B1**
(45) Veröffentlichungstag und Bekanntmachung des Hinweises auf die Patenterteilung: **02.10.2019**
(21) Anmeldenummer: 18157224.9
(22) Anmeldetag: 29.04.2015
(51) Int. Cl.: B23K 26/00, B29C 65/64, B29C 65/00, B32B 18/00, C04B 41/80, B23K 103/04, B23K 103/10, B23K 103/14, B23K 103/00, B23K 103/08

(54) **KERAMIKBAUTEIL MIT ZUMINDEST EINEM MULTIDIMENSIONAL STRUKTURIERTEN VERBINDUNGSABSCHNITT SOWIE VERFAHREN ZU DESSEN HERSTELLUNG**
CERAMIC COMPONENT CONTAINING AT LEAST ONE OF MULTIDIMENSIONAL STRUCTURED CONNECTION SECTION AND METHOD FOR THE PRODUCTION THEREOF
COMPOSANT CÉRAMIQUE DOTÉ D'AU MOINS UNE SECTION DE RACCORDEMENT STRUCTURÉE MULTIDIMENSIONNELLE AINSI QUE SON PROCÉDÉ DE FABRICATION

(43) Veröffentlichungstag der Anmeldung: 11.07.2018
(62) Teilanmeldung aus: 15001270.6
(73) Patentinhaber: Airbus Defence and Space GmbH, 82024 Taufkirchen (DE)
(72) Erfinder: JÜRGENS, Michael, 80797 München (DE); MERTENS, Tobias, 28217 Bremen (DE)
(74) Vertreter: Isarpatent

(56) Entgegenhaltungen:
- EP-A1- 2 230 330
- CN-A- 104 439 956
- JP-A- 2009 264 692
- US-A1- 2005 016 969

## Beschreibung

Die vorliegende Erfindung betrifft ein Keramikbauteil mit zumindest einem multidimensional strukturierten Verbindungsabschnitt, wobei der Verbindungsabschnitt zu einer adhäsiven Verbindung mit faserverstärktem Polymerlaminat vorgesehen ist und ein Verfahren zu dessen Herstellung.

Insbesondere in der Luft- und Raumfahrtindustrie, aber auch beim Bau von Wasser- und Landfahrzeugen sowie beim Bau von Rotoren von Windkraftanlagen und Leichtbau-Strukturen sind Faserverbundstrukturen nicht mehr wegzudenken. Das dabei eingesetzte faserverstärkte Polymerlaminat kann dabei Kohlefaser, Glasfaser, Kevlar, Borfaser oder Mischfasern oder Gewebe aus den vorgenannten Fasern enthalten. Die Polymermatrix wird dabei entweder durch "nasse" Epoxyharze, Polyesterharze, etc. gebildet oder es werden so genannte "Prepregs", welche Harz und Gewebefaser beinhalten verwendet. Dies liegt insbesondere an den nahezu unbegrenzten Gestaltungsmöglichkeiten und der enormen Gewichtseinsparung im Vergleich zu metallischen oder keramischen Werkstoffen. Durch entsprechende Ausrichtung oder Materialwahl der Faserrovings oder Fasermatten, d.h. beispielsweise einem Mix aus Kohlefaser und Glasfaser oder Kohlefaser und Keflar, wobei eine Faserart in der einen Richtung und die andere Faserart in der anderen Richtung oder eine Faserart innen und die andere Faserart außen verwendet wird, können aus Faserverbundmaterial konstruierte Bauteile Kräfte optimal in der vorberechneten Weise aufnehmen, d.h. sie sind optimal an die erwarteten Belastungen angepasst und können allein hierdurch zu einer deutlichen Gewichtsreduktion beitragen. Schwachstelle von Faserverbundstrukturen ist jedoch ihr geringer Delaminationswiderstand bzw. die Klebefestigkeit von Verbindungen aus genau dieser Werkstoffgruppe. Schlagartige, hohe Initialbelastungen können interlaminare Rissinitiierung provozieren, dem Rissfortschritt unter vergleichsweise geringem Energiebedarf folgt.

Insbesondere aus dem Flugzeug und Schiffsbau aber auch aus dem Fahrzeugbau ist es bekannt, Kohlefaserkunststoff bzw. CFK-Hautschalen mit CFK- Stringern, CFK-Spanten, metallischen Spanten und ähnlichen Strukturbauteilen zu versteifen, um den hohen Belastungen im Hauptschalenbereich gewichtsoptimiert zu widerstehen. Derartige Bauteile können beispielsweise durch Prepregtechnologie, Thermosetverfahren oder Vakuuminfusionsverfahren zum Einbringen einer Matrix, beispielsweise eines Epoxidharzes, in Verstärkungsfasern und nachfolgendes Aushärten in einem Ofen oder Autoklaven hergestellt werden. Ein Faserverbundbauteil ist zum Beispiel aus Verstärkungsfasern, sei es Rovings oder Gewebematten, aufgebaut. Strukturelle Fügestellen, welche eine bestimmte Schadenstoleranz aufweisen sollen, können mit dünnen Metallblechen zwischen Stoßflächen versehen werden, wobei durch die Materialdicke des Metallblechs dem Faserverbundbauteil eine Querverstärkung hinzugefügt wird. Es wurden verschiedene Verbundtechnologien entwickelt, um die Eigenschaften in Querrichtung zu verbessern, wie beispielsweise Z-Pinning, Heften oder Tuften.

Ferner sind Co-bonding-Verfahren bekannt, bei denen in einem ersten Schritt ein Faserverbundfügepartner unter Vakuum aushärtet und dann in einem zweiten Schritt der ausgehärtete erste Fügepartner mit einem "frischen" Fügepartner integriert verbunden und ausgehärtet wird. Beispielsweise kann dies im Bereich des Flugzeugbaus eine ausgehärtete Längsverstärkung (Stringer) sein, die mit der "nassen" Hautschale des unteren Rumpfbereichs einer Flugzeugstruktur verbunden wird.

Ferner gibt es auch Hybridbauteile, die aus einer Kombination von Metall- oder Keramikbauteilen mit einem Polymerlaminat aufgebaut sind und an verschiedenen Stellen im Bereich eines Luft- oder Raumfahrzeugs oder eines Land-oder Wasserfahrzeugs angeordnet sein können.

Dokument US 2005/016969 A1, nächstliegender Stand der Technik, offenbart ein Keramikbauteil und ein Verfahren zum multidimensionalen Strukturieren von dem Keramikbauteil für die verbesserte Adhäsion von metallischen Beschichtungen, wobei die Oberfläche der Keramik eine Rauigkeit in der Größenordnung von 10 µm bis 0.5 mm aufweist.

Dokument WO2011/069899 A2 betrifft ein Verfahren zum Anbinden eines Faserverbundbauteils an ein Strukturbauteil eines Luft- und Raumfahrzeuges. Dabei wird eine Metallfolie als Querverstärkungselement zwischen dem Faserverbundbauteil und dem Strukturbauteil vorgesehen. Sie wird mit mindestens einem Verankerungsabschnitt, welcher von der dem Faserverbundbauteil zugewandten Oberfläche im 90° Winkel hervorsteht ausgebildet und zwischen das Faserverbundbauteil und dem Strukturbauteil eingefügt und darin integriert. Ferner wird eine entsprechende Anordnung nach diesem Verfahren hergestellt. Hierdurch kann bereits ein verbesserter Delaminationswiderstand erzielt werden, der bei Verwendung einer Titanfolie als Querverstärkungselement bei ca. 1,5 kJ/m² liegt.

Daher liegt der vorliegenden Erfindung das technische Problem zugrunde, die Nachteile des Standes der Technik zu vermeiden und eine Verbesserung der Klebeverbindungen von Faserverbundstrukturen mit keramischen Bauteilen zu schaffen, um den Delaminationswiderstand bzw. die Klebefestigkeit zu erhöhen. Dies betrifft insbesondere auch die Verbindung von Faserverbundstrukturen mit Faserverbundstrukturen mittels keramischer Zwischenlage. Ferner sollen mögliche die Klebefestigkeit negativ beeinflussende Kontaminationen des keramischen Bauteils beseitigt werden.

Diese Aufgabe wird durch ein Verfahren mit den Merkmalen des Anspruchs 1 sowie eine Keramikbauteil mit den Merkmalen des Anspruchs 6 gelöst. Vorteilhafte Ausbildungsformen und Weiterbildungen der Erfindung werden in den Unteransprüchen beschrieben.

Hierdurch werden die Nachteile des Standes der Technik vermieden und eine Verbesserung der Klebeverbindungen von Faserverbundstrukturen mit keramischen Bauteilen geschaffen und der Delaminationswiderstand bzw. die Klebefestigkeit erhöht. Der Delaminationswiderstand lässt sich durch die Erfindung gegenüber einer nur milliskalierten Struktur um mehr als 30% vergrößern. Dies betrifft insbesondere auch die Verbindung von Faserverbundstrukturen mit Faserverbundstrukturen mittels keramischer Zwischenlage. Ferner werden durch das erfindungsgemäße Verfahren mögliche die Klebefestigkeit negativ beeinflussende Kontaminationen des keramischen Bauteils beseitigt.

Das erfindungsgemäße Verfahren zum multidimensionalen Strukturieren von zumindest einem Verbindungsabschnitt eines Keramikbauteils, wobei der Verbindungsabschnitt zu einer adhäsiven Verbindung mit faserverstärktem Polymerlaminat vorgesehen ist, umfasst dabei folgende Schritte:
1.) Erzeugen einer milliskalierten Struktur, d.h. einer Makrostruktur mit Dimensionen größer 1000µm, durch Ausbilden von Verankerungselementen an dem Verbindungsabschnitt;
2.) Erzeugen einer mikroskalierten Struktur, d.h. einer Mikrostruktur mit Dimensionen zwischen 1µm und 1000µm, auf dem Verbindungsabschnitt und den Verankerungselementen;
3.) Erzeugen einer nanoskalierten Struktur, d.h. einer Nanostruktur mit Dimensionen kleiner 1µm, über der mikroskalierten Struktur auf dem Verbindungsabschnitt und den Verankerungselementen.

Die Verfahrensschritte können dabei vorzugsweise in dieser Reihenfolge erfolgen. Hierdurch wird eine von der Nanostruktur überlagerte Mikrostruktur auf dem milliskalierten Verbindungsabschnitt mit Verankerungselementen geschaffen. Dabei kann das zumindest ein Verankerungselement im Wesentlichen senkrecht oder in einem vorbestimmten Winkel von dem Verbindungsabschnitt hervorstehen. Auch können die Verankerungselemente als Pins, Widerhaken, Verzahnungen, Spitzen, Helixstrukturen, etc. ausgebildet sein. Vorteilhafterweise sind die Verankerungselemente einstückig mit dem Verbindungsabschnitt ausgebildet.

Durch das erfindungsgemäße Verfahren wird auf dem Keramikbauteil eine neue Oberflächentopographie erzeugt. Diese Strukturen ermöglichen eine deutlich verbesserte mechanische Verankerung mit dem umgebenden Polymer und/oder eine höhere Anzahl sich ausbildender kovalenter Bindungen. Die auf diese Weise verstärkten Faserverbundlaminate bzw. -verbindungen weisen als Konsequenz einen signifikant erhöhten Delaminationswiderstand gegenüber bekannten Faserverbundlaminaten auf und führen somit zu einer erhöhten Lebensdauer der betroffenen Faserverbundbauteile.

Eine vorteilhafte Weiterbildung des Verfahrens sieht vor, dass für das Keramikbauteils die milliskalierte Struktur beispielsweise durch Urformen bereits vor dem Sintern erzeugt werden kann.

Eine weitere vorteilhafte Weiterbildung des Verfahrens sieht vor, dass das Erzeugen der mikroskalierten Struktur auf dem Verbindungsabschnitt und den Verankerungselementen mittels Sandstrahlen oder elektromagnetische Strahlung, insbesondere Laserbestrahlung erfolgt. Hierdurch können auch Verunreinigungen der Struktur beseitigt werden. Auf diese Weise kann eine verbesserte Kontakt- und Klebefläche geschaffen werden.

Eine weitere vorteilhafte Weiterbildung des Verfahrens sieht vor, dass das Erzeugen einer nanoskalierten Struktur über der mikroskalierten Struktur auf dem Verbindungsabschnitt und den Verankerungselementen mittels Laserbestrahlen erfolgt. Insbesondere die Überlagerung der mikroskalierten Struktur durch die nanoskalierte Struktur fördert eine optimale Fügefläche der Verbundstruktur.

Eine weitere vorteilhafte Weiterbildung des Verfahrens sieht vor, dass die Laserbestrahlung mittels einem Kurzpulslaser, insbesondere einem Femto-, Piko- oder Nanosekunden-Laser mit einer hohen Pulsfolgenfrequenz erfolgt, der mit einem definierten Vorschub relativ zu dem Verbindungsabschnitt verfahren wird. Dabei sind die Vorschubgeschwindigkeit und der Vorschubweg durch die Art der Bearbeitung - Mikroskalierung oder Nanoskalierung - definiert.

Noch eine weitere vorteilhafte Weiterbildung des Verfahrens sieht vor, dass der Laser zum Erzeugen der mikroskalierten Struktur und der Laser zum Erzeugen der nanoskalierten Struktur derart hintereinander angeordnet sind, dass die Nanostruktur überlagerte Mikrostruktur in einem Vorschub-Durchlauf erzeugt wird. Hierdurch kann der Fertigungsablauf optimiert und beschleunigt werden.

Das erfindungsgemäße Keramikbauteil mit zumindest einem multidimensional strukturieren Verbindungsabschnitt, sieht einen Verbindungsabschnitt zu einer adhäsiven Verbindung mit faserverstärktem Polymerlaminat vor, der eine milliskalierte Struktur, insbesondere ausgebildet durch Verankerungselementen, und eine mikroskalierte Struktur auf dem Verbindungsabschnitt und den Verankerungselementen aufweist, die von einer weiteren nanoskalierten Struktur überlagert ist. Dies ermöglicht eine wirkungsvolle Verstärkung und dreidimensionale mechanische Verankerung des Keramikbauteils mit einer Polymerfaserverbundstruktur und eine höhere Anzahl sich ausbildender kovalenter Bindungen.

Bei den Keramikbauteilen können Materialien verwendet werden, die elektrisch und thermisch isolierend sind und dennoch mechanisch und thermisch bearbeitet werden können, wie beispielsweise MACOR, Bornitrid, Siliziumcarbid oder Aluminiumoxid.

Eine vorteilhafte Ausführungsform des erfindungsgemäßen Keramikbauteils sieht vor, dass allseitig Verbindungsabschnitte vorgesehen sind. Bei plattenförmigen Keramikbauteil stehen die Verbindungselemente dann in Z-Richtung hervor.

Ferner sieht die Erfindung die Verwendung eines erfindungsgemäßen Keramikbauteils als Z-Verstärkung von faserverstärkten Polymerlaminaten vor. Dabei kann das Keramikbauteil vollständig von Polymerlaminat umgeben sein.

Ferner kann das erfindungsgemäß hergestellten Keramikbauteil als Verbindungselement in einem Co-Bonding-Verfahren vorgesehen sein. Hier wird nach dem Aushärten der Klebeverbindung des Keramikbauteils mit dem ersten Fügepartners unter Vakuum in einem Autoklaven im nächsten Schritt mit einem nass zu klebenden zweiten Fügepartner geklebt.

Weitere, die Erfindung verbessernde Maßnahmen werden nachstehend anhand von Beispielen und den beigefügten Figuren näher dargestellt. Es zeigen:
- Figur 1: Ein Flussdiagram mit den erfindungsgemäßen Verfahrensschritten;
- Figur 2a-2d: ein Metallbauteil mit multidimensional strukturierten Verbindungsabschnitt;
- Figur 3: Explosionsansicht einer Faserverbundstruktur mit Verstärkungsplatte;
- Figur 4: Seitenansicht der Faserverbundstruktur aus Figur 3 in verklebtem Zustand;

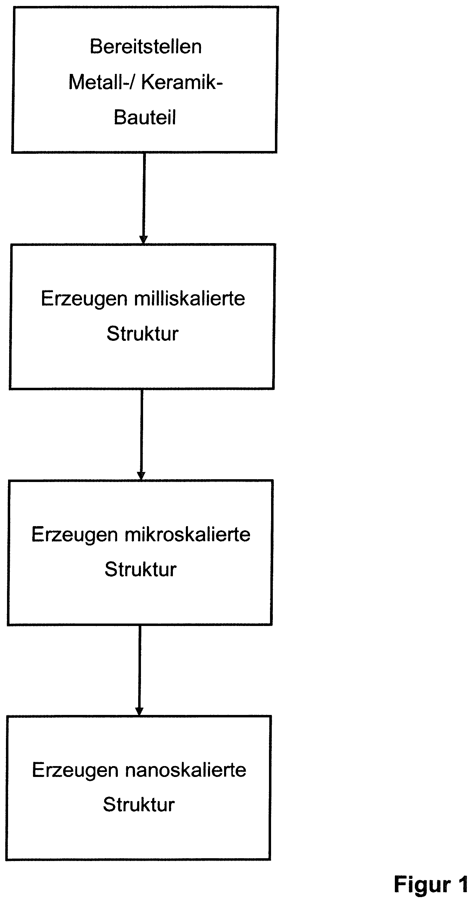

Figur 1 zeigt die Verfahrensschritte in der Reihenfolge des Verfahrensablaufs. Dabei wird zunächst ein Keramikbauteil bereitgestellt, welches ein Keramikkörper sein kann. Danach erfolgt die Erzeugung einer milliskalierten Struktur auf diesem Bauteil. Hierdurch werden Verankerungselemente auf dem ganzen Keramikbauteil oder auf Teilbereichen desselben geschaffen. Dabei kann das zumindest eine Verankerungselement im Wesentlichen senkrecht oder in einem vorbestimmten Winkel von dem Verbindungsabschnitt hervorstehen. Auch können die Verankerungselemente als Pins, Widerhaken, Verzahnungen, Spitzen, Helixstrukturen, etc. ausgebildet sein. Vorteilhafterweise sind die Verankerungselemente einstückig mit dem Verbindungsabschnitt ausgebildet Dabei wird die konkrete Art der Erzeugung der milliskalierten Struktur maßgeblich durch die Materialstärke und Materialart des Keramikbauteils beeinflusst. Im Falle eines Metallbauteils können die Verbindungsabschnitte mittels Stanzbiegeverfahren, Hochgeschwindigkeits-Metallzerspanen, Elektronenstrahlbearbeitung, Additiv-Schicht-Herstellungsverfahren, Auftragsschweißen, Anschweißen von Verankerungselementen oder andere geeignete Verfahren erfolgen. Im Falle eines Keramikbauteils erfolgt dieser Schritt beispielsweise durch Urformen bereits vor dem Sintern.

Der nächste Schritt des Erzeugens der mikroskalierten Struktur auf dem Keramikbauteil inklusive der darauf ausgestalteten Millistruktur, erfolgt beispielsweise mittels Sandstrahlen oder elektromagnetischer Strahlung, insbesondere Laserbestrahlung.

Schließlich erfolgt als weiterer Schritt das Erzeugen einer nanoskalierten Struktur über der mikroskalierten Struktur auf dem Verbindungsabschnitt und den Verankerungselementen mittels Laserstrahlen.

Nachfolgend wird ein Verfahren von Beispiele 1 bis 3 beschrieben, die nicht Teil der Erfindung sind.

### Beispiel 1:

Beispielhaft kann ein erstes Verfahren zum multidimensionalen Strukturieren von zumindest einem Verbindungsabschnitt eines Metallbauteils in folgender Weise ablaufen:
1. Konsekutives Stanzen und Umformen eines Titanbleches, beispielsweise Ti15V3Al3Cr3Sn mit einer Blechdicke t=0,4 mm, zum Erzeugen einer milliskalierten Struktur;
2. Sandstrahlen des Titanbleches, beispielsweise mit Al2O3 oder SiO2 mit einer Korngröße von 250µm - 500µm und einem Strahldruck von 7 bar, zum Erzeugen einer mikroskalierten Struktur;
3. Laserbestrahlen, beispielsweise mit einer Wellenlänge von 1064 nm, einer Pulsdauer kleiner 20ns, einer Geschwindigkeit von 800 mm/s, einem Strom von 43 A, einer Frequenz von 10 kHz und einfacher Wiederholung, zum Erzeugen einer nanoskalierten Struktur.

### Beispiel 2:

Beispielhaft kann ein zweites Verfahren zum multidimensionalen Strukturieren von zumindest einem Verbindungsabschnitt eines Metallbauteils in folgender Weise ablaufen:
1. Konsekutives Stanzen und Umformen eines Titanbleches, beispielsweise Ti15V3Al3Cr3Sn mit einer Blechdicke t=0,4 mm, zum Erzeugen einer milliskalierten Struktur;
2. Lasermikrostrukturierung, beispielsweise mit einer Wellenlänge von 1064 nm, einer Pulsdauer kleiner 20ns, einer Geschwindigkeit von 800 mm/s, einem Strom von 20 - 150 A, einer Frequenz von 10 kHz und Überlappung größer 80%, zum Erzeugen einer mikroskalierten Struktur;
3. Laserbestrahlen, beispielsweise mit einer Wellenlänge von 1064 nm, einer Geschwindigkeit von 800 mm/s, einem Strom von 43 A, einer Frequenz von 10 kHz und einfacher Wiederholung, zum Erzeugen einer nanoskalierten Struktur.

Bei diesem zweiten Beispiel könnte der 2. und 3. Schritt in einem Durchlauf erfolgen, d.h. mit zumindest zwei Lasern, die in einer gemeinsamen Vorschubeinrichtung oder zwei getrennten Vorschubeinrichtungen hintereinander angeordnet sind und zusammen über dem Werkstück, hier dem Titanblech, verschoben werden.

### Beispiel 3:

Beispielhaft kann ein drittes Verfahren zum multidimensionalen Strukturieren von zumindest einem Verbindungsabschnitt eines Metallbauteils in folgender Weise ablaufen:
1. Konsekutives Stanzen und Umformen eines Titanbleches, beispielsweise Ti15V3Al3Cr3Sn mit einer Blechdicke t=0,4 mm, zum Erzeugen einer milliskalierten Struktur;
2. Lasermikrostrukturierung, beispielsweise mit einer Wellenlänge von 1064 nm, einer Geschwindigkeit von 800 mm/s, einem Strom von 20 - 150 A, einer Frequenz von 10 kHz und Überlappung größer 80%, zum Erzeugen einer mikroskalierten Struktur;
3. Anodisieren in einem Elektrolyt, beispielsweise aus Natriumhydroxid mit einer Konzentration zwischen 100-300 g/l Natrium, Natriumtartrat mit einer Konzentration von 20-200 g/l, einem Komplexbildner z.B. MGDA mit einer Konzentration von 1 - 200 g/l und weiteren Bestandteilen, zum Erzeugen einer nanoskalierten Struktur.

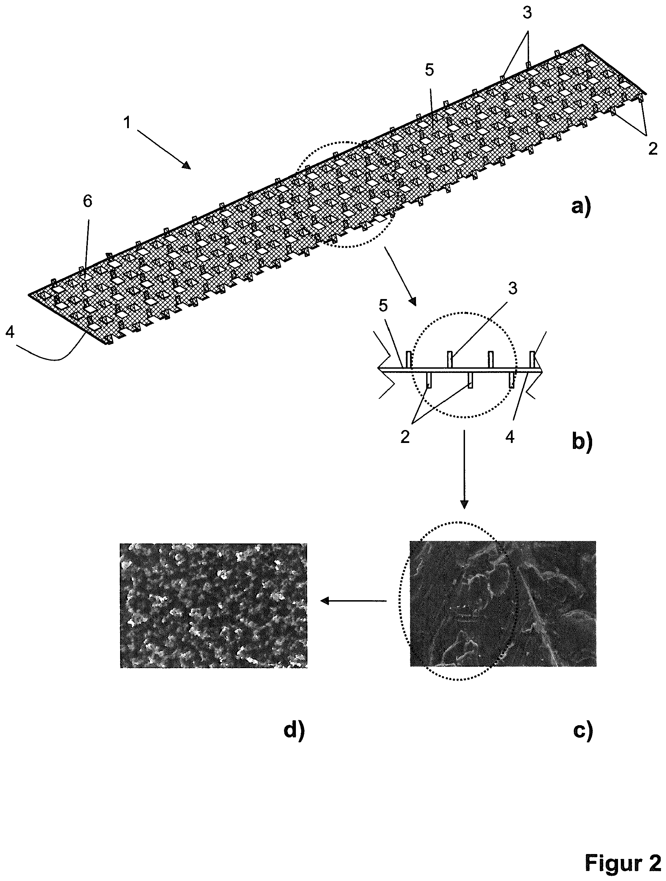

Figur 2a zeigt eine perspektivische Ansicht einer vorteilhaften Form eines Metallbauteils 1 mit multidimensional strukturiertem Verbindungsabschnitt. Im vorliegenden Fall ist der Verbindungsabschnitt auf Ober- und Unterseite vorgesehen. Bei der vorliegenden Form handelt es sich um ein konsekutiv gestanzt und umgeformtes Titanblech, beispielsweise Ti15V3Al3Cr3Sn mit einer Blechdicke t=0,4 mm, auf dem zunächst eine milliskalierte Struktur erzeugt wurde, d.h. eine Struktur im Bereich größer als 1 mm strukturiert. Dabei werden zunächst über das Titanblech regelmäßig verteilte Rechtecke an drei Seiten ausgestanzt und anschließend untere Verankerungselemente 2 von der Blechebene oder X-Y Ebene aus gesehen nach unten und obere Verankerungselemente 3 nach oben aus den gestanzten Bereichen senkrecht zur Ebene des Titanblechs herausgebogen, wie in der Seitenansicht in Figur 2b gezeigt. Dadurch entstehen im Blech rechteckige Aussparungen 6 und in Z-Achsenrichtung nach unten und oben hervorstehende Verankerungselemente. Sofern nur eine Seite des Bleches als Verankerung dienen soll, können entsprechende Verankerungselemente 2, 3 beispielsweise auch jeweils nur nach unten bzw. nur nach oben in Z-Achsenrichtung hervorstehend ausgebildet sein.

Ferner ist das Metallbauteil 1 mittels Sandstrahlen der Unterseite des Titanblechs bzw. des unteren Verbindungsabschnitts 4 und der Oberseite des Titanblechs bzw. des oberen Verbindungsabschnitts 5 und der darauf befindlichen oberen und unteren Verankerungselemente 2, 3 mikroskaliert, d.h. in einem Bereich größer 1 µm strukturiert. Im vorliegenden Ausführungsbeispiel Al2O3 mit einer Korngröße von 250-500 µm und einem Strahldruck von 7 bar zum Sandstrahlen verwendet. Die hierdurch erzeugte mikroskalierte Oberflächenstruktur ist vergrößert in Figur 2c gezeigt. Ein vergleichbares Ergebnis lässt sich durch eine Mikroskalierung mittels Laserbestrahlung erzielen.

Die mikroskalierte Struktur des Metallbauteils 1 wurde am Ende durch eine Nanoskalierung überlagert, die im vorliegenden Ausführungsbeispiel durch einen elektrochemischen Prozess erfolgte, wie beispielsweise eine Anodisierung mit einem Elektrolyt. Hierdurch wurde über der mikroskalierten Struktur eine Oberflächenstrukturierung in einem Bereich kleiner 0,1 µm geschaffen. Die hierdurch erzeugte mikroskalierte Oberflächenstruktur ist vergrößert in Figur 2d gezeigt. Ein vergleichbares Ergebnis lässt sich beispielsweise durch eine Mikroskalierung mittels Laserbestrahlung erzielen.

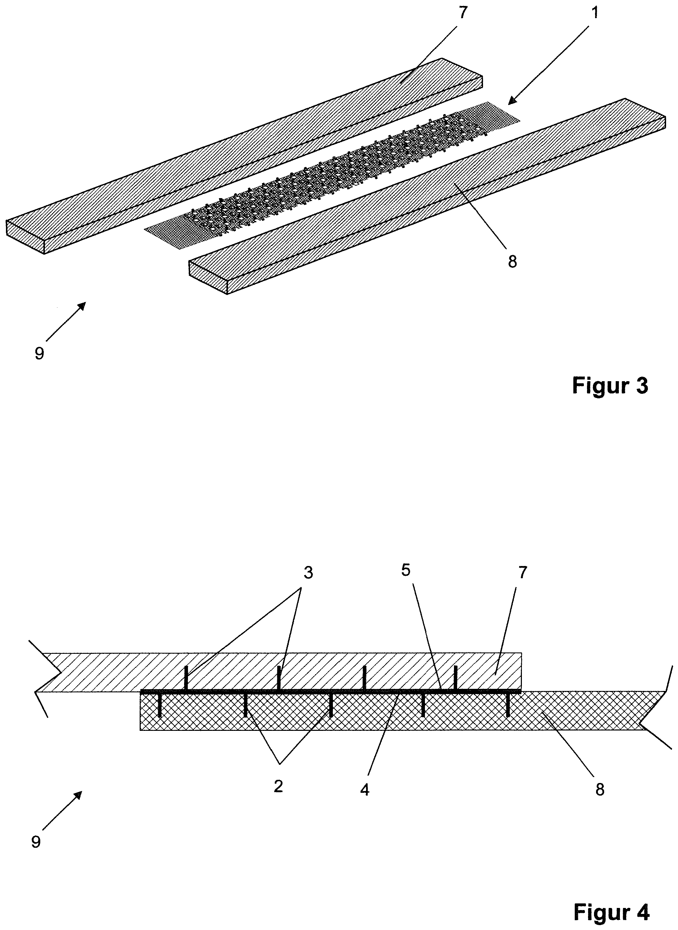

Figur 3 zeigt eine Explosionsansicht einer Faserverbundstruktur mit Verstärkungsplatte. Figur 4 zeigt eine Seitenansicht der Faserverbundstruktur aus Figur 3 in verklebtem Zustand. Dabei wird ein oberer Fügepartner 7 mit dem erfindungsgemäßen Metallbauteil derart verbunden, dass die oberen Verankerungselemente 3 in Z-Achsenrichtung in die Faserstruktur des oberen Fügepartners 7 eingreifen und so eine optimale Klebeverankerung ermöglichen. Dabei ist im vorliegenden Ausführungsbeispiel die Faserstruktur des oberen Fügepartners 7 eine Kohlenstofffaserstruktur, die entweder in einem Nassklebeverfahren mittels Epoxyharz oder mittels einem Klebefilms (film adhäsive) mit dem als Verstärkungselement verwendeten Metallbauteil 1 verbunden wird. Nach entsprechendem Aushärten unter Vakuum in einem Autoklaven, erfolgt die Verbindung mit dem unteren Fügepartner 9, der ebenfalls eine Kohlenstofffaserstruktur ist, die entweder in einem Nassklebeverfahren mittels Epoxyharz oder mittels einem Klebefilms mit dem als Verstärkungselement verwendeten Metallbauteil 1 zu einer Verbundstruktur 9 verbunden wird.

Das multidimensional strukturierte Metallbauteil 1 ermöglicht eine deutlich gegenüber herkömmlichen Verstärkungen verbesserte Z-Verstärkung von faserverstärkten Polymerlaminaten. Hierdurch kann der Delaminationswiderstand auf 2 kJ/m² erhöht werden.

### Bezugszeichenliste

- **1**: Metallbauteil
- **2**: Unteres Verankerungselement
- **3**: Oberes Verankerungselement
- **4**: Unterer Verbindungsabschnitt
- **5**: Oberer Verbindungsabschnitt
- **6**: Aussparung
- **7**: Oberer Fügepartner
- **8**: Unterer Fügepartner
- **9**: Verbundstruktur

## Patentansprüche

1. Verfahren zum multidimensionalen Strukturieren von zumindest einem Verbindungsabschnitt eines Keramikbauteils, wobei der Verbindungsabschnitt zu einer adhäsiven Verbindung mit faserverstärktem Polymerlaminat vorgesehen ist, und wobei das Verfahren folgende Schritte aufweist:
1.) Erzeugen einer milliskalierten Struktur, d. h. einer Makrostruktur mit Dimensionen größer 1000µm, durch Ausbilden von Verankerungselementen an dem Verbindungsabschnitt;
2.) Erzeugen einer mikroskalierten Struktur, d. h. einer Mikrostruktur mit Dimensionen zwischen 1µm und 1000µm, auf dem Verbindungsabschnitt und den Verankerungselementen;
3.) Erzeugen einer nanoskalierten Struktur, d. h. einer Nanostruktur mit Dimensionen kleiner 1µm, über der mikroskalierten Struktur auf dem Verbindungsabschnitt und den Verankerungselementen.

2. Verfahren nach Anspruch 1, wobei das Erzeugen der mikroskalierten Struktur auf dem Verbindungsabschnitt und den Verankerungselementen mittels Sandstrahlen oder elektromagnetische Strahlung, insbesondere Laserbestrahlung erfolgt.

3. Verfahren nach Anspruch 1, wobei das Erzeugen einer nanoskalierten Struktur über der mikroskalierten Struktur auf dem Verbindungsabschnitt und den Verankerungselementen mittels Laserbestrahlen erfolgt.

4. Verfahren nach Anspruch 2 oder 3, wobei die Laserbestrahlung mittels einem Kurzpulslaser, insbesondere einem Femto-, Piko- oder Nanosekunden-Laser mit einer hohen Pulsfolgenfrequenz erfolgt, der mit einem definierten Vorschub relativ zu dem Verbindungsabschnitt verfahren wird.

5. Verfahren nach einem der Ansprüche 2 bis 4, wobei der Laser zum Erzeugen der mikroskalierten Struktur und der Laser zum Erzeugen der nanoskalierten Struktur derart hintereinander angeordnet sind, dass die Nanostruktur überlagerte Mikrostruktur in einem Vorschub-Durchlauf erzeugt wird.

6. Keramikbauteil mit zumindest einem multidimensional strukturieren Verbindungsabschnitt, wobei der Verbindungsabschnitt zu einer adhäsiven Verbindung mit faserverstärktem Polymerlaminat vorgesehen ist, und wobei das Keramikbauteil eine milliskalierte Struktur d. h. einer Makrostruktur mit Dimensionen größer 1000µm ausgebildet durch Verankerungselemente, und eine mikroskalierte Struktur, d. h. einer Mikrostruktur mit Dimensionen zwischen 1µm und 1000µm, auf dem Verbindungsabschnitt und den Verankerungselementen aufweist, die von einer weiteren nanoskalierten Struktur, d. h. einer Nanostruktur mit Dimensionen kleiner 1µm, überlagert ist.

7. Keramikbauteil nach Anspruch 6, wobei allseitig Verbindungsabschnitte vorgesehen sind.

8. Verwendung eines Keramikbauteils nach einem der Ansprüche 6 bis 8 als Z-Verstärkung von faserverstärkten Polymerlaminaten.

9. Verwendung eines mit einem Verfahren nach Anspruch 1 bis 5 hergestellten Keramikbauteils oder eines Keramikbauteils gemäß einem der Ansprüche 6 bis 8 als Verbindungselement in einem Co-Bonding-Verfahren.

## Claims

1. Method for multi-dimensionally structuring at least one connection section of a ceramic component, wherein the connection section is provided for forming an adhesive bond with fibre-reinforced polymer laminate, and wherein the method comprises the following steps:
1.) Producing a milliscale structure, i.e. a macrostructure having dimensions larger than 1000 µm, by forming anchoring elements at the connection section;
2.) Producing a microscale structure, i.e. a microstructure having dimensions between 1 µm and 1000 µm, on the connection section and the anchoring elements;
3.) Producing a nanoscale structure, i.e. a nanostructure having dimensions smaller than 1 µm, over the microscale structure on the connection section and the anchoring elements.

2. Method according to Claim 1, wherein producing the microscale structure on the connection section and the anchoring elements is carried out by means of sandblasting or electromagnetic radiation, in particular laser irradiation.

3. Method according to Claim 1, wherein producing a nanoscale structure over the microscale structure on the connection section and the anchoring elements is carried out by means of laser irradiation.

4. Method according to Claim 2 or 3, wherein the laser irradiation is carried out by means of a short-pulse laser, in particular a femto-, pico- or nanosecond laser having a high pulse repetition frequency, which laser is moved with a defined feed relative to the connection section.

5. Method according to any of Claims 2 to 4, wherein the laser for producing the microscale structure and the laser for producing the nanoscale structure are arranged one behind the other in such a way that the nanostructure-overlaid microstructure is produced in one feed pass.

6. Ceramic component comprising at least one multi-dimensionally structure connection section, wherein the connection section is provided for forming an adhesive bond with fibre-reinforced polymer laminate, and wherein the ceramic component has a milliscale structure, i.e. a macrostructure having dimensions larger than 1000 µm, formed by anchoring elements, and a microscale structure, i.e. a microstructure having dimensions between 1 µm and 1000 µm, on the connection section and the anchoring elements, which microstructure scale is overlaid by a further nanoscale structure, i.e. a nanostructure having dimensions smaller than 1 µm.

7. Ceramic component according to Claim 6, wherein connection sections are provided on all sides.

8. Use of a ceramic component according to Claim 6 or 7 as Z-reinforcement of fibre-reinforced polymer laminates.

9. Use of a ceramic component produced by a method according to Claims 1 to 5 or of a ceramic component according to any of Claims 6 to 8 as a connection element in a co-bonding method.

## Revendications

1. Procédé de structuration multidimensionnelle d'au moins une portion d'assemblage d'un élément structural en céramique, la portion d'assemblage étant conçue pour un assemblage adhésif avec un stratifié polymère renforcé de fibres, et le procédé comprenant les étapes suivantes :
1) génération d'une structure à l'échelle millimétrique, c'est-à-dire une macrostructure ayant des dimensions supérieures à 1000 µm, par formation d'éléments d'ancrage au niveau de la portion d'assemblage ;
2) génération d'une structure à l'échelle micrométrique, c'est-à-dire d'une microstructure ayant des dimensions entre 1 µm et 1000 µm, sur la portion d'assemblage et les éléments d'ancrage ;
3) génération d'une structure à l'échelle nanométrique, c'est-à-dire une nanostructure ayant des dimensions inférieures à 1 µm, au-dessus de la structure à l'échelle micrométrique sur la portion d'assemblage et les éléments d'ancrage.

2. Procédé selon la revendication 1, la génération de la structure à l'échelle micrométrique sur la portion d'assemblage et les éléments d'ancrage étant effectuée au moyen du sablage ou d'un rayonnement électromagnétique, notamment d'une irradiation au laser.

3. Procédé selon la revendication 1, la génération d'une structure à l'échelle nanométrique au-dessus de la structure à l'échelle micrométrique sur la portion d'assemblage et les éléments d'ancrage étant effectuée au moyen d'une irradiation au laser.

4. Procédé selon la revendication 2 ou 3, l'irradiation au laser étant effectuée au moyen d'un laser à impulsions courtes, notamment d'un laser à femto, pico ou nanosecondes avec une fréquence de train d'impulsions élevée, lequel est déplacé avec une avance définie par rapport à la portion d'assemblage.

5. Procédé selon l'une des revendications 2 à 4, le laser destiné à générer la structure à l'échelle micrométrique et le laser destiné à générer la structure à l'échelle nanométrique étant disposés l'un derrière l'autre de telle sorte que la microstructure superposée à la nanostructure est générée dans un passage d'avance.

6. Élément structural en céramique comprenant au moins une portion d'assemblage structurée multidimensionnelle, la portion d'assemblage étant conçue pour un assemblage adhésif avec un stratifié polymère renforcé de fibres et l'élément structural en céramique possédant une structure à l'échelle millimétrique, c'est-à-dire une macrostructure ayant des dimensions supérieures à 1000 µm formée par des éléments d'ancrage, et une structure à l'échelle micrométrique, c'est-à-dire une microstructure ayant des dimensions entre 1 µm et 1000 µm sur la portion d'assemblage et les éléments d'ancrage, sur laquelle est superposée une structure à l'échelle nanométrique supplémentaire, c'est-à-dire une nanostructure ayant des dimensions inférieures à 1 µm.

7. Élément structural en céramique selon la revendication 6, des portions d'assemblage étant présentes sur tous les côtés.

8. Utilisation d'un élément structural en céramique selon la revendication 6 on 7 comme renfort en Z de stratifiés polymères renforcés de fibres.

9. Utilisation d'un élément structural en céramique fabriqué avec un procédé selon les revendications 1 à 5 ou d'un élément structural en céramique selon l'une des revendications 6 à 8 comme élément d'assemblage dans un procédé de collage composite.
